# DEMANDE DE BREVET EUROPEEN

(11) **EP 3 872 942 A1**
(43) Date de publication de la demande: **01.09.2021**
(21) Numéro de dépôt: 20159359.7
(22) Date de dépôt: 25.02.2020
(51) Int. Cl.: H02G 3/04, H02G 3/06

(54) **CHEMIN DE CÂBLES A SECTION POLYGONALE, ET PROCÉDÉ D'ASSEMBLAGE DE TELS CHEMINS DE CÂBLES**

(71) Demandeur: Niedax GmbH & Co. KG, 53545 Linz/Rhein (DE)
(72) Inventeur: HENSELER, Mark, 53562 St Katharinen (DE); TIPMANN, Andreas, 53562 St Katharinen (DE)
(74) Mandataire: Demulsant, Xavier

(57) **Abrégé**

Tronçons de chemin (**2**, **3**) de câbles en treillis de fils comprenant des fils de chaîne (**14-17**), des fils de trame (**13**) et une ouverture (**12**) longitudinale, les fils de trame étant pliés dans un plan transversal et comportant quatre portions (**8-11**) successives séparées par trois plis (**19-21**), deux portions (**9**, **10**) des fils de trame s'étendant sur deux côtés du tronçon, deux autres portions (**8, 11**) des fils de trame s'étendant de part et d'autre de l'ouverture, le tronçon comprenant une première partie (**4**) extrême et un deuxième partie (**5**) extrême, les parties extrêmes étant chacune pourvues d'un fil de trame d'extrémité, la première partie extrême portant des moyens d'assemblage (**6**, **7**) en saillie dans une direction sensiblement perpendiculaire au plan transversal du fil de trame d'extrémité, les moyens d'assemblage étant configurés pour être encliquetés sur le fil de trame d'extrémité de la deuxième partie extrême d'un tronçon de chemin de câbles.

## Description

L'invention a trait au domaine des chemins de câbles.

Les chemins de câbles sont formés de tronçons généralement réalisés en métal, notamment en acier, le cas échéant en acier inoxydable, ou en matériau polymère ou composite.

Depuis de nombreuses années, et sans qu'il existe de règles internationales ou européennes en la matière, la dimension longitudinale des tronçons de chemins de câbles est de trois mètres, en général, ainsi qu'il est rappelé page 2 lignes 12 et 13 du document FR2737355 (METAL DEPLOYE).

Lors de l'installation des chemins de câbles, les tronçons sont positionnés bout à bout, et fixés, de place en place, sur des consoles ou des pendards, ou bien encore suspendus, la distance entre les supports étant typiquement de l'ordre d'un mètre cinquante.

L'invention vise plus particulièrement les tronçons de chemins de câbles en treillis de fils, ou les tronçons de chemins de câbles dont les parties extrêmes sont en treillis de fils.

Les tronçons en treillis de fils comprennent habituellement des fils longitudinaux, appelés fils de chaîne, et des fils transversaux, appelés fils de trame, croisés aux fils de chaîne.

La grande majorité des chemins de câbles présentent une section en U, comprenant deux ailes et une paroi de fond, les fils de trame comportant deux plis L'ouverture de ces chemins de câbles est de grande largeur, sensiblement égale à la largeur de la paroi de fond sur laquelle reposent les câbles.

Dans certaines conceptions, l'ouverture des chemins de câbles est de largeur réduite, la section transversale de ces chemins de câbles étant triangulaire, en G, ou polygonale.

Dans les chemins de câbles de section en G, les fils de trame comportent trois plis, les tronçons en treillis de fils comportant deux ailes et une paroi supérieure sensiblement parallèle à la paroi de fond, la section en G étant inscrite dans un carré ou un rectangle. Dans ces tronçons de section en G, les fils de trame présentent la forme d'un polygone à quatre côtés, auquel un angle a été supprimé.

Les documents EP 355081 (LANZ), DE 29723610 (ANGERMEYER), FR2991518 (PEMSA), FR 2894726 (ICM), ES 2367389 (PEMSA), WO 95/19652 (GASJBERG), WO 2016/202340 (SILTEC) décrivent des exemples de tronçons en treillis de fils de section en G.

Dans les chemins de câbles de section triangulaire, les fils de trame comportent trois plis (par exemple USD595118 AB WIBE).

Une problématique dans le montage de chemins de câbles est la liaison entre deux tronçons successifs.

On connait des tronçons de chemins de câbles en treillis de fils pourvus de moyens d'assemblage intégrés, aucune éclisse n'étant à rapporter lors de l'assemblage des tronçons. Chaque tronçon de treillis de fils est ainsi pourvu d'une partie extrême mâle, et d'une partie extrême femelle complémentaire de la partie mâle, comme décrit dans les documents EP 973238 (OBO), EP1511142 (GEWISS), ES1076189 (BASOR), WO2015181421 (VALDINOX), ES2355992 (PEMSA), ES2316256 (INTERFLEX), EP3139460 (GEWISS), ES1078809U (VALDINOX), FR 3003098 (NIEDAX), FR3007590 (NIEDAX), FR3007591 (NIEDAX), FR3007592 (NIEDAX).

Les moyens d'assemblage intégrés de chemins de câbles en treillis de fils connus de l'état de la technique ne permettent pas un assemblage rapide et aisé de tronçons de faible ouverture, en particulier de tronçons ayant une section triangulaire ou une section en G.

Avec de tels tronçons dont l'ouverture est de largeur réduite, il n'est en effet pas possible d'effectuer l'assemblage par insertion d'un premier tronçon dans un deuxième tronçon, suivie d'un pivotement selon une direction longitudinale, tel que décrit par exemple dans les documents EP3139460 (GEWISS), EP1511142 (GEWISS).

Avec de tels tronçons, il pourrait être imaginé d'effectuer l'assemblage par rapprochement longitudinal des tronçons, tel que décrit par exemple en figure 5 du document EP2733803 (VALDINOX). Les efforts manuels à mettre en oeuvre pour déplacer et encliqueter les tronçons sont toutefois très élevés et l'encombrement des tronçons ne facilite pas ce rapprochement longitudinal.

Il en résulte que, pour de tels tronçons dont l'ouverture est de largeur réduite, l'assemblage est effectué au moyen d'éclisses rapportées, avec les problèmes qui en découlent. La fabrication puis le montage des éclisses ou des pièces de jonction sur les treillis de fils engendrent des coûts importants. Le montage des éclisses sur chaque tronçon de chemins de câbles, sur chantier, nécessite un outillage et prend du temps. De plus, sur le chantier, le monteur peut ne pas avoir un accès aisé aux ailes de chaque tronçon de chemins de câbles sur lesquelles doivent être montées les éclisses.

L'invention vise à pallier au moins en partie les problèmes qui viennent d'être présentés.

Un premier objet est de proposer un tronçon de chemin de câbles dont l'ouverture est de largeur réduite, le tronçon présentant une section polygonale, et notamment de section en triangle ou en G, apte à s'assembler à un autre tronçon de chemin de câbles identique, de manière automatique, autrement dit sans nécessiter d'outil et de pièces de fixation supplémentaires.

Un deuxième objet est de proposer un tel tronçon de chemin de câbles, qui soit facilement montable et démontable, y compris dans le cas où l'espace de montage est réduit et/ou la vision de l'opérateur est réduite.

Un troisième objet est de proposer un tel tronçon de chemin de câbles ne présentant pas de risques de blessures à l'opérateur lors du montage, démontage ou d'une intervention comme par exemple un nettoyage.

Un quatrième objet est de proposer un tel tronçon de chemin de câbles nécessitant une quantité minimale de matière première, et un nombre réduit d'opérations de fabrication.

A ces fins, il est proposé, selon un premier aspect, un tronçon de chemin de câbles en treillis de fils comprenant des fils de chaîne, des fils de trame et une ouverture longitudinale, les fils de trame étant pliés dans un plan transversal et comportant quatre portions successives séparées par trois plis, deux portions des fils de trame s'étendant sur deux côtés du tronçon, deux portions extrêmes des fils de trame s'étendant de part et d'autre de l'ouverture, le tronçon comprenant une première partie extrême et un deuxième partie extrême, les parties extrêmes étant chacune pourvues d'un fil de trame d'extrémité, la première partie extrême portant des moyens d'assemblage en saillie dans une direction sensiblement perpendiculaire au plan transversal du fil de trame d'extrémité, les moyens d'assemblage étant configurés pour être encliquetés sur le fil de trame d'extrémité de la deuxième partie extrême d'un tronçon de chemin de câbles.

Avantageusement, les moyens d'assemblage comprennent une première pièce d'assemblage en forme de boucle de fil.

Avantageusement, la première pièce d'assemblage est fixée sur la première portion extrême d'au moins un fil de trame.

Dans certaines mises en œuvre, l'ouverture est bordée par un fil de chaîne formant fil de rive, la première pièce d'assemblage comprenant deux bras longitudinaux, l'un des bras étant au contact du fil de rive.

Avantageusement, les moyens d'assemblage comprennent une deuxième pièce d'assemblage en forme de boucle de fil.

Dans certaines mises en œuvre, le tronçon de chemin de câbles présente une section triangulaire.

Dans certaines mises en œuvre particulières, l'ouverture du tronçon s'étend sur un premier côté du tronçon formé par les portions extrêmes des fils de trame, les moyens d'assemblage comprenant une première pièce d'assemblage en forme de boucle de fil fixée sur la première portion extrême des fils de trame, chacun des deux autres côtés du tronçon comprenant, en saillie dans une direction sensiblement perpendiculaire au plan transversal du fil de trame d'extrémité, une deuxième pièce d'assemblage en forme de boucle de fil.

Dans d'autres mises en œuvre, le tronçon de chemin de câbles présente une section en G définie par quatre portions successives des fils de trame, l'ouverture du tronçon s'étendant sur un angle du tronçon formé par les portions extrêmes des fils de trame, les moyens d'assemblage comprenant une première pièce d'assemblage en forme de boucle de fil fixée sur la première portion extrême des fils de trame, deux autres côtés du tronçon comprenant, en saillie dans une direction sensiblement perpendiculaire au plan transversal du fil de trame d'extrémité, une deuxième pièce d'assemblage en forme de boucle de fil.

Dans certaines mises en œuvre particulières, partant d'un premier bord de l'ouverture et allant vers le second bord de l'ouverture en suivant les fils de trame, le tronçon comprend un premier côté sur lequel est fixé une première pièce d'assemblage en forme de boucle de fil, un deuxième et un troisième côté sur chacun desquels est fixé une deuxième pièce d'assemblage en forme de boucle de fil, et un quatrième côté ne comportant pas de moyen d'assemblage.

Il est proposé, selon un deuxième aspect, un procédé de montage d'un ensemble de deux tronçons de chemin de câbles en treillis de fils, les tronçons comprenant des fils de chaîne s'étendant suivant une direction longitudinale, des fils de trame et une ouverture longitudinale, les fils de trame étant pliés dans un plan transversal et comportant quatre portions successives séparées par trois plis, le procédé comprenant une étape de rotation d'un premier tronçon par rapport à l'autre, suivant la direction longitudinale, suivie d'une étape d'encliquetage.

Il est proposé, selon un troisième aspect, un procédé de montage d'un ensemble de deux tronçons tels que présentés ci-dessus, le procédé de montage comprenant les étapes suivantes:
- rapprochement d'une première partie extrême du premier tronçon de chemin de câbles avec la deuxième partie extrême du deuxième tronçon de chemin de câbles,
- insertion des moyens d'assemblage au sein d'un espace défini par le fil de trame de la deuxième partie extrême du deuxième tronçon de chemin de câbles, de sorte à positionner un premier moyen d'assemblage en regard de la première aile du deuxième tronçon de chemin de câbles,
- pivotement du premier tronçon de chemin de câbles et/ou du deuxième tronçon de chemin de câbles, de sorte à permettre l'encliquetage du fil de trame au sein du premier moyen d'assemblage.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective de deux tronçons de chemin de câbles assemblés entre eux, selon un premier mode de réalisation, les tronçons étant de section triangulaire ;
- la figure 2 est une vue en perspective d'un des deux tronçons de chemin de câbles représenté en figure 1, un premier moyen d'assemblage et un deuxième moyen d'assemblage étant détaillés en médaillons ;
- la figure 3 est une vue latérale du tronçon représenté en figure 2 ;
- la figure 4 est une vue en perspective des deux tronçons de chemin de câbles de la figure 1, en cours d'assemblage ;
- la figure 5 est une vue selon le plan V-V de la figure 4 ;
- la figure 6 est une vue analogue à la figure 4, les deux tronçons étant représentés dans un état proche de l'assemblage final ;
- la figure 7 est une vue selon le plan VII-VII de la figure 6 ;
- la figure 8 est une vue en perspective d'un tronçon de chemin de câbles selon deuxième mode de réalisation, le tronçon étant de section en G, un premier moyen d'assemblage et un deuxième moyen d'assemblage étant détaillés en médaillons.

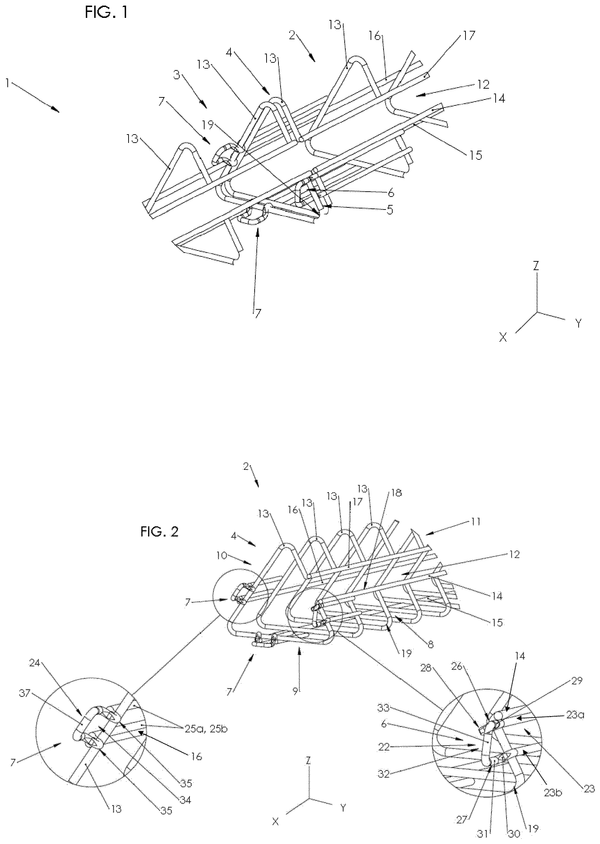

La figure 1 représente un ensemble **1** comprenant un premier tronçon **2** de chemin de câbles ainsi qu'un deuxième tronçon **3** de chemin de câbles.

Dans la suite de cette description, par souci de simplicité, le premier tronçon **2** de chemin de câbles sera dénommé premier tronçon **2,** et le deuxième tronçon **3** de chemin de câbles sera dénommé deuxième tronçon **3.**

Seule une partie extrême des deux tronçons **2, 3** est représentée en figure 1.

Il est entendu que, entre ses deux parties extrêmes, chaque tronçon **2, 3** peut comporter une partie centrale (non représentée) en treillis de fils ou non, par exemple en tôle.

Une première partie **4** extrême du premier tronçon **2** est liée à une deuxième partie **5** extrême du deuxième tronçon **3,** par l'intermédiaire de moyens **6, 7** d'assemblage.

Dans les modes de réalisation représentés, les moyens d'assemblage **6, 7** sont placés en première partie **4** extrême du premier tronçon **1,** et permettent un assemblage par encliquetage.

Avantageusement, les deux tronçons **2, 3** comportent chacun une première partie **4** extrême et une deuxième partie **5** extrême telles que décrites et représentées.

Avantageusement, les deux tronçons **2, 3** sont sensiblement identiques.

Les tronçons **2, 3** ont une section polygonale.

Par « section » on désigne ici la forme générale des tronçons vus suivant un plan perpendiculaire à leur direction principale d'élancement.

Par « polygonale » on désigne ici le fait que la section des tronçons définit une ligne polygonale sensiblement fermée.

Par « sensiblement fermée », l'on désigne ici le fait que, par opposition aux tronçons conventionnels en U dont l'ouverture est sensiblement de même largeur que la paroi de fond, les tronçons **2, 3** comportent une ouverture de faible largeur.

Cette faible largeur ne permet pas l'insertion d'un tronçon dans un autre, par exemple pour le stockage ou le transport.

Cette faible largeur d'ouverture ne permet pas l'assemblage de deux tronçons par insertion d'un premier tronçon dans un deuxième tronçon, suivie d'un pivotement suivant une direction longitudinale, tel que décrit par exemple dans le document EP3139460.

Dans certains modes de réalisation, la section des tronçons est triangulaire, la section des tronçons comprenant trois angles et trois côtés. Dans certains modes de réalisation, la section des tronçons est en forme de triangle isocèle.

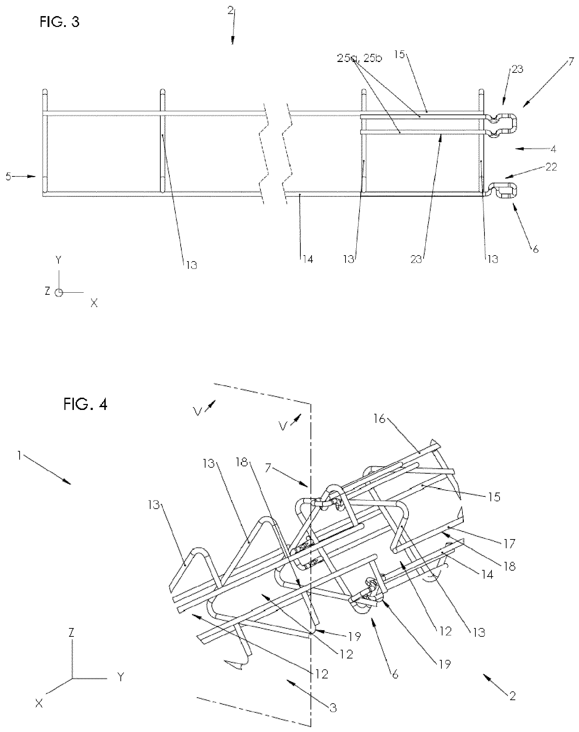

Dans le mode de réalisation des figures 1 à 7, la section des tronçons **2, 3** est en forme de triangle sensiblement équilatéral.

Dans d'autres modes de réalisation, les tronçons ont une section polygonale dont un angle a été supprimé.

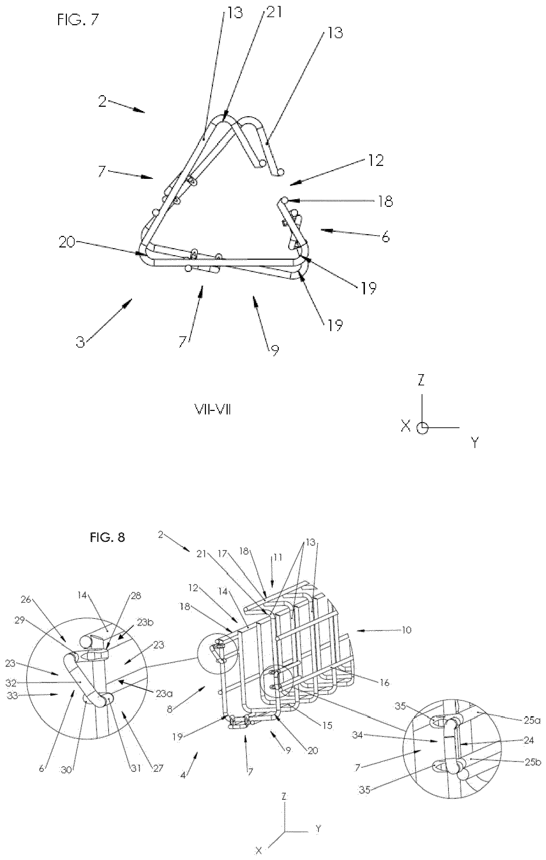

Dans le mode de réalisation représenté en figure 8, les tronçons 2, 3 ont une section en G.

Les tronçons **2, 3** délimitent un espace interne, destiné à recevoir des câbles, et sont pourvus d'une ouverture **12** permettant l'accès à l'espace interne, notamment lors de l'installation de câbles.

L'on définit un repère orthogonal XYZ formant un trièdre, comprenant trois axes perpendiculaires deux à deux, à savoir :
- un axe X, définissant une direction longitudinale, confondue avec une direction générale d'extension de l'ensemble **1,** lorsque le premier tronçon **2** et le deuxième tronçon **3** de câbles sont assemblés ;
- un axe Y, définissant une direction transversale ;
- un axe Z, perpendiculaire au plan XY.

Dans la suite de la description, et en relation au repère défini ci-dessus :
- les termes "longitudinal" ou "longitudinalement" font référence à une direction confondue avec l'axe X ;
- les termes "transversal" ou "transversalement" font référence au plan YZ.

Tel que représenté, le premier tronçon **2** et le deuxième tronçon **3** (ou leurs parties **4, 5** extrêmes) sont formés par soudure de fils **13** de trame, transversaux, et de fils **14, 15, 16, 17** de chaîne longitudinaux.

Dans certaines mises en œuvre, dans chaque tronçon **2, 3,** les fils **13** de trame sont identiques et équidistants.

Dans d'autres mises en œuvre, seules les parties **4, 5** extrêmes des tronçons **2, 3** sont réalisées à partir d'un maillage de fils **13** de trame et de fils **14, 15, 16, 17** de chaîne.

Les fils **13** de trame et les fils **14, 15, 16, 17** de chaîne sont avantageusement réalisés en un même matériau, sont de même section, et sont réalisés par exemple en fil d'acier de section circulaire.

Dans d'autres mises en œuvre, non représentées, au moins certains fils de trame et/ou au moins certains fils de chaîne sont de section ovale, carrée, ou polygonale. La section de certains fils de trame et/ou de certains fils de chaîne peut être augmentée ou réduite, pour adapter les tronçons aux charges en service.

Dans les modes de réalisation représentés en figure 1 et 8, l'ouverture **12** des tronçons **2, 3** est délimitée par deux fils de trame **14, 17,** fixés en externe sur les fils de trame **13,** le terme « externe» étant utilisé ici par opposition à l'espace interne des tronçons **2, 3.**

En partant d'un premier bord de l'ouverture **12,** délimitée par un fil de chaîne **14** et en suivant un fil de trame **13** pour aller vers le second bord de l'ouverture **12,** délimitée par un fil de chaine **17,** les tronçons **2, 3** représentés comprennent une première portion **8,** une deuxième portion **9,** une troisième portion **10,** et une quatrième portion **11.**

L'ouverture **12** est disposée entre la première portion **8** et la quatrième portion **11.**

Avantageusement, les fils **13** de trame, et les fils **14, 15, 16, 17** de chaîne sont émoussés, lisses ou biseautés à leur extrémité libre, de sorte à ne pas former de partie coupante, et ainsi améliorer la sûreté de manipulation des tronçons **2, 3,** en limitant les risques de blessures d'un utilisateur.

Dans les modes de réalisation représentés, les fils de chaîne **14, 17** bordant l'ouverture **12** viennent en regard des extrémités libres des fils de trame **13,** réduisant encore les risques de blessures d'un utilisateur ou des câbles.

Dans les modes de réalisation représentés, les fils **14, 15, 16, 17** de chaîne sont fixés en face externe des fils **13** de trame, le terme « externe» étant utilisé en opposition à l'espace interne des tronçons **2, 3.**

Dans d'autres mises en œuvre, non représentées, au moins une partie des fils de chaîne est fixé en face interne des fils de trame.

Dans les modes de réalisation représentés, pour la fabrication des tronçons **2, 3,** les fils **13** de trame et les fils **14, 15, 16, 17** de chaîne sont assemblés perpendiculairement les uns aux autres, pour former une nappe.

La nappe est ensuite conformée, de manière à obtenir la première portion **8,** la deuxième portion **9,** la troisième portion **10** et la quatrième portion **11** formant ensembles une section longitudinale polygonale.

Un espace intérieur est ainsi défini, permettant le passage des câbles.

Une ouverture **12** entre la première portion **8** et la quatrième portion **11,** présentant une dimension minimale, est avantageusement laissée, ce qui permet l'insertion ou le retrait de câbles au sein des tronçons **2, 3.**

L'on décrit maintenant plus particulièrement le premier mode de réalisation des tronçons **2, 3,** en référence aux figures 1 à 7.

Dans ce premier mode de réalisation, la deuxième portion **9** et la troisième portion **10** définissent deux des trois côtés des tronçons **2, 3** et peuvent former surface d'appui pour les câbles.

Les tronçons **2, 3** sont de section triangulaire et chaque portion **8, 9, 10, 11** porte un fil de chaîne.

La première portion **8** est munie d'un premier fil **14** de chaîne formant fil de rive **18.** La deuxième portion **9** est munie d'un deuxième fil **15** de chaîne et la troisième portion **10** d'un troisième fil **16** de chaîne. La quatrième portion **11** est munie d'un quatrième fil **17** de chaîne, formant fil de rive **18.**

Il est entendu que chaque portion **8, 9, 10, 11** peut porter plus d'un fil de chaîne, fixé en externe ou en interne des fils de trame **13.**

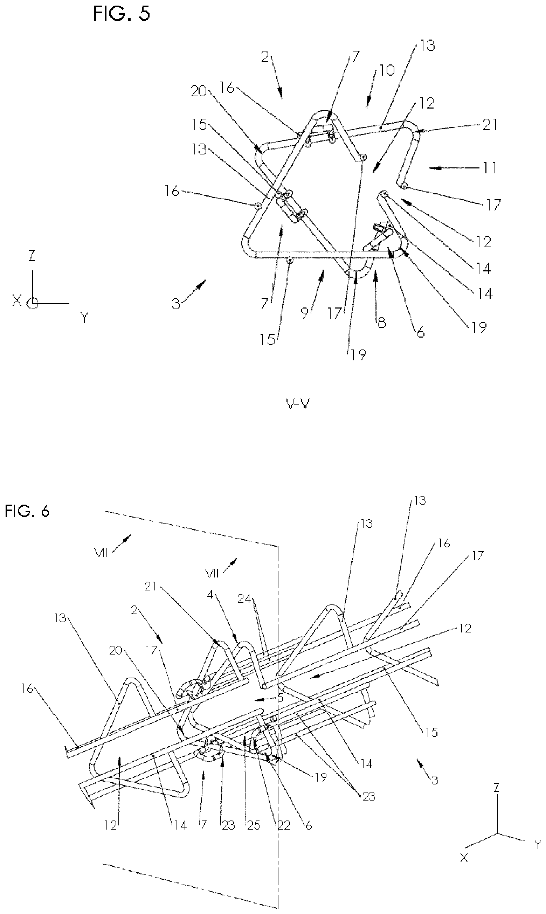

Comme il apparait en figures 5 et 7, le triangle formé par les fils **13** de trame définit ainsi :
- un premier sommet **19** entre la première portion **8** et la deuxième portion **9,**
- un deuxième sommet **20** entre la deuxième portion **9** et la troisième portion **10,**
- et un troisième sommet **21** entre la troisième portion **10** et la quatrième portion **11.**

Ainsi qu'il est représenté sur les figures 1 à 7, la quatrième portion **11** s'étend dans un plan coplanaire à la première portion **8,** l'ouverture **12** étant disposée entre la première portion **8** et la quatrième portion **11,** permettant un accès latéral aux câbles.

L'on décrit maintenant plus particulièrement le deuxième mode de réalisation des tronçons **2, 3,** en référence à la figure 8.

Dans ce deuxième mode de réalisation, les tronçons **2, 3** sont de section en G et chaque portion **8, 9, 10, 11** porte au moins un fil de chaîne.

La première portion **8** est munie d'un premier fil **14** de chaîne formant fil de rive **18** et d'un deuxième fil de chaîne. La deuxième portion **9** est munie d'un fil **15** de chaîne et la troisième portion **10** est pourvue de deux fils **16** de chaîne. La quatrième portion **11** est munie d'un fil **17** de chaîne, formant fil de rive **18.**

Il est entendu que chaque portion **8, 9, 10, 11** peut porter plus d'un fil de chaîne, fixé en externe ou en interne des fils de trame **13.**

Comme il apparait en figure 8, la section en G formée par les fils **13** de trame définit ainsi :
- un premier sommet **19** entre la première portion **8** et la deuxième portion **9,**
- un deuxième sommet **20** entre la deuxième portion **9** et la troisième portion **10,**
- et un troisième sommet **21** entre la troisième portion **10** et la quatrième portion **11.**

Dans le deuxième mode de réalisation, représenté en figure 8, les fils **13** de trame confèrent aux tronçons **2, 3** une section en G, s'inscrivant dans un quadrilatère, par exemple un rectangle.

La première portion **8** et la quatrième portion **11** s'étendent selon des plans orthogonaux.

L'on décrit maintenant les moyens d'assemblage **6, 7.**

Comme il peut être observé en médaillons sur les figures 2 et 8, les tronçons **2, 3** comprennent chacun un premier moyen **6** d'assemblage et un deuxième moyen **7** d'assemblage, tous deux étant agencés sur la première partie **4** extrême.

Le premier moyen **6** d'assemblage est vu en détail en médaillon de droite en figure 2 et en médaillon de gauche en figure 8.

Le deuxième moyen d'assemblage 7 est vu en détail en médaillon de gauche en figure 2 et en médaillon de droite en figure 8.

Les moyens **6, 7** d'assemblage font saillie de la première partie **4** extrême, au delà d'un fil de trame d'extrémité, et sont aptes à s'assembler, notamment s'emboîter ou s'encliqueter, sur un fil **13** de trame de la deuxième partie **5** extrême.

Avantageusement la première portion **8** comprend un premier moyen **6** d'assemblage, la deuxième portion **9** et la troisième portion **10** comprenant chacune un deuxième moyen **7** d'assemblage.

Dans les modes de réalisation représentés, la quatrième portion **11** est dépourvue de moyen **6, 7** d'assemblage.

Dans les modes de réalisation représentés, seule la première partie **4** extrême est munie de moyens **6, 7** d'assemblage, la deuxième partie **5** extrême étant exempte de moyens **6, 7** d'assemblage.

De la sorte, il est possible d'assembler la première partie **4** extrême mâle d'un premier tronçon **2** sur la deuxième partie **5** extrême femelle d'un deuxième tronçon **3** semblable au premier tronçon **2.**

De manière avantageuse, le premier moyen **6** d'assemblage et le deuxième moyen **7** d'assemblage sont réalisés à partir de fils pliés, permettant notamment d'éviter la présence de pièces pointues, ou d'arrêtés coupantes.

Avantageusement, le fil employé pour la réalisation du premier moyen **6** d'assemblage et/ou du deuxième moyen **7** d'assemblage est le même que celui employé pour les fils **14, 15, 16, 17** de chaîne et/ou les fils **13** de trame des tronçons **2, 3.**

La fabrication du premier moyen **6** d'assemblage et/ou du deuxième moyen **7** d'assemblage est ainsi facilitée.

Le premier moyen **6** d'assemblage est muni d'une première partie **22** de liaison et d'une première partie **23** de support.

Le deuxième moyen **7** d'assemblage est muni d'une deuxième partie **24** de liaison, et d'une deuxième partie **25** de support.

Les parties **23, 25** de support permettent de solidariser les moyens **6, 7** d'assemblage aux fils **13** de trame.

Afin de permettre un bon maintien en position, la première partie **23** de support est avantageusement disposée le long et en contact du premier fil **14** de chaîne. Le cas échéant, une soudure est effectuée entre la partie **23** de support et le fil **14** de chaîne.

De même, afin de permettre un bon maintien en position des deux moyens d'assemblage **7,** la deuxième partie **25** de support est avantageusement disposée parallèlement et au contact d'un fil **15, 16** de chaîne. Le cas échéant, une soudure est effectuée entre la partie **25** de support et le fil **15, 16** de chaîne.

Dans les mises en œuvre représentées, la première partie **23** de support se présente sous la forme de deux fils longitudinaux **23a, 23b,** fixés en externe sur les tronçons **2, 3,** sur deux fils de trame **13.**

Dans les mises en œuvre représentées, la deuxième partie **25** de support se présente également sous la forme de deux fils longitudinaux **25a, 25b,** fixés en externe sur les tronçons **2, 3,** sur deux fils de trame **13.**

Les fils utilisés pour former la première partie **23** de support et la deuxième partie **25** de support sont avantageusement les mêmes que ceux utilisés pour former les fils de trame **13** et les fils de chaîne **14-17.**

Dans d'autres mises en œuvre, non représentées, les parties **23, 25** de support sont formés par des plats.

Le cas échéant, une solidarisation entre les parties **23, 25** de support et les fils **14, 15, 16** de chaîne est effectuée par soudage.

L'on décrit à présent une première pièce **22** de liaison, en se référant au médaillon de droite de la figure 2 et au médaillon de gauche de la figure 8.

La première pièce **22** de liaison portée par le tronçon **2, 3** comprend une partie **26** supérieure et une partie **27** inférieure.

La partie **26** supérieure est avantageusement munie d'un crochet **28,** avec une concavité tournée vers l'extérieur du tronçon **2, 3.**

Le crochet **28** est apte à venir en contact avec un fil **13** de trame de la deuxième partie **5** extrême d'un tronçon **2, 3.**

La partie **26** supérieure comprend une portion **29** rectiligne.

La partie **27** inférieure est pourvue d'un décroché **30** ayant une forme concave, la concavité étant tournée vers l'extérieur du tronçon **2, 3.**

Le décroché **30** est apte à venir en prise avec un fil **13** de trame de la deuxième partie **5** extrême du tronçon **2, 3.**

La partie **27** inférieure comprend également une portion **31** rectiligne.

Selon les modes de réalisation représentés, le crochet **28** et le décroché **30** sont disposés l'un au-dessus de l'autre.

Afin de permettre l'arrêt en translation des tronçons **2, 3** l'un par rapport à l'autre et de permettre l'assemblage des tronçons **2, 3** entre eux, la portion **31** rectiligne et la portion **29** rectiligne sont décalées transversalement.

Avantageusement, la portion **31** rectiligne et de la portion **29** rectiligne, sont reliées par 'une jonction **33,** de sorte à former une première boucle **32.**

Une telle jonction **33** a une fonction de guidage, lors de l'assemblage des tronçons **2, 3** entre eux.

Comme représenté sur la figure 7, la première pièce **22** de liaison présente un profil, selon un plan transversal, en forme de Z permettant, comme expliqué par la suite, de faciliter l'assemblage transversal d'un côté du premier tronçon **2** sur le deuxième tronçon **3,** par encliquetage.

La première boucle **32** est apte à venir s'accrocher sur la deuxième partie **5** extrême.

De cette façon, le tronçon présente une géométrie sécurisée à la manipulation, et peut se monter facilement.

L'on décrit à présent une deuxième pièce **24** de liaison, en se référant au médaillon de gauche de la figure 2 et au médaillon de droite de la figure 8.

Avantageusement, la deuxième pièce **24** de liaison comprend des divisions **35** courbées, disposées chacune au bout des deux fils longitudinaux **25a, 25b**.

Avantageusement, les deuxièmes pièces **24** de liaison du tronçon **2, 3** sont identiques, et sont aptes à venir s'accrocher sur le fil **13** de trame d'extrémité de la deuxième partie **5** extrême.

Une telle disposition facilite le guidage lors de la mise en place de la première pièce **22** de liaison sur le fil **13** de trame d'une des parties **5** extrêmes d'un des tronçons **2, 3,** par exemple si l'utilisateur n'a pas une vue dégagée ou suffisamment éclairée des chemins de câbles.

Avantageusement, les deux divisions **35** courbées présentent un profil en arc de cercle, qui décrit un rayon de courbure sensiblement égal au rayon du fil **13** de trame d'une des parties **5** extrêmes.

Le fil **13** de trame d'extrémité épouse ainsi au plus près les divisions **35** courbées, permettant une mise en place du fil précise et guidée. Le montage s'en trouve facilité.

Une partie **37** de liaison relie les deux divisions **35** et forme une deuxième boucle **34.**

Une telle deuxième boucle **34** offre notamment l'avantage de raidir le deuxième moyen **7** d'assemblage.

L'on se réfère maintenant aux figures 5 à 7, représentant des étapes d'une méthode de montage d'un ensemble 1 formé de tronçons **2, 3** du premier mode de réalisation.

Il est entendu que le montage de tronçon **2, 3** selon le deuxième mode de réalisation de la figure 8 s'effectue de manière identique au procédé de montage présenté ci-dessous.

L'utilisateur place la première partie **4** extrême du premier tronçon **2** à proximité de la deuxième partie **5** extrême du deuxième tronçon **3.**

L'utilisateur positionne le premier tronçon **2** en alignement avec le deuxième tronçon **3,** chacune des ailes du premier tronçon **2** étant parallèle avec les ailes respectives du deuxième tronçon **3.**

L'utilisateur effectue un pivotement du premier tronçon **2,** ou de manière alternative du deuxième tronçon **3,** de sorte à positionner le premier moyen **6** d'assemblage en regard du premier sommet **19.**

Il est envisageable que le positionnement se fasse en pivotant le premier tronçon **2** et le deuxième tronçon **3** dans des sens opposés.

L'utilisateur peut, à partir d'une telle position, insérer les moyens **6, 7** d'assemblage au sein de l'espace défini par le fil **13** de trame de la deuxième partie **5** extrême du deuxième tronçon **3,** en rapprochant le premier tronçon **2** du deuxième tronçon 3.

Dans une telle position, illustrée figures 5 et 6, le premier moyen **6** d'assemblage est disposé au sein du premier sommet **19,** les deuxièmes moyens **7** d'assemblage étant disposés au sein du deuxième sommet **20** et troisième sommet **21.**

Dans une telle position, l'utilisateur met en regard le fil **13** de trame de la deuxième partie **5** extrême avec le crochet **28,** le décroché **30,** et les divisions **35** courbées.

Une telle position atteinte, l'utilisateur pivote le premier tronçon **2,** ou le deuxième tronçon **3,** de sorte à rendre coplanaire la première portion **8** du premier tronçon **2** avec la première portion **8** du deuxième tronçon **3.**

La rotation a lieu selon un axe imaginaire longitudinal.

De manière alternative, une telle étape est réalisable en pivotant le premier tronçon **2** et le deuxième tronçon **3** dans des sens opposés.

Les figures 6 et 7 représentent le tronçon **2** en cours de rotation au sein du deuxième tronçon **3.**

Grâce à une telle rotation, l'utilisateur fait glisser le fil **13** de trame de la deuxième partie **5** extrême au sein du crochet **28,** tout en effectuant la rotation.

Chacun des moyens **6, 7** d'assemblage du premier tronçon **2** se rapproche des fils **14, 15, 16, 17** de chaîne du deuxième tronçon **3,** provoquant le glissement du fil **14, 15, 16, 17** de chaîne le long de la portion **29** rectiligne, ce qui provoque une déformation élastique du deuxième moyen **7** d'assemblage.

Le fil **14, 15, 16, 17** de chaîne de la deuxième partie 5 extrême pénètre au sein du décroché **30,** annulant l'effet de poussée exercé sur le deuxième moyen **7** d'assemblage, provoquant l'encliquetage du premier tronçon **2** sur le deuxième tronçon **3.**

Un tel montage par encliquetage présente l'intérêt de ne nécessiter aucun outil, ainsi que d'être facilement reproductible pour un utilisateur, sans nécessiter un apprentissage spécifique.

En outre, les sensations et/ou le bruit provoqués par l'encliquetage des portions **8, 9, 10, 11** sur le fil **13** de trame de la deuxième partie **5** extrême agissent comme un détrompeur pour l'utilisateur, lui permettant de savoir immédiatement si l'assemblage a été correctement réalisé ou non.

Le démontage d'un tel ensemble **1** s'effectue en tournant le premier tronçon **2** dans un sens opposé au sens permettant le montage du premier tronçon **2** sur le deuxième tronçon **3,** ce qui permet de désolidariser les moyens **6, 7** d'assemblage du fil **13** de trame de la deuxième partie **5** extrême.

Un tel démontage s'effectue en un nombre réduit d'opérations, et ne nécessite aucun outil particulier.

Le démontage de l'ensemble **1** peut donc être effectué en un temps réduit, et facilement.

Une telle caractéristique trouve une application avantageuse dans le domaine de l'agroalimentaire, où des contraintes sanitaires imposent des nettoyages fréquents et réguliers.

Un tel démontage de l'ensemble **1** présente également l'avantage d'être réalisable dans des espaces réduits, où les mouvements amples de l'utilisateur ne sont pas possibles.

Les chemins de câbles décrits ci-dessus présentent un grand nombre d'avantages.

En premier lieu, les chemins de câbles selon l'invention présentent une grande facilité d'assemblage et de désassemblage, notamment grâce au principe du montage par emboitage ou encliquetage, réalisable par un mouvement de pivotement.

Les chemins de câbles selon l'invention présentent une grande robustesse, permettant de supporter de multiples opérations de montage et/ou démontage en raison de déformations élastiques des tronçons.

Les chemins de câbles selon l'invention sont de fabrication simplifiée, les moyens **6, 7** d'assemblage étant avantageusement réalisés à partir des mêmes types de fils que les fils **13** de trame ou les fils **14, 15, 16, 17** de chaîne, les moyens **6, 7** d'assemblage pouvant être rapportés sur les tronçons **2, 3** lors d'une unique opération de soudure.

La section polygonale permet une bonne saisie des tronçons **2, 3,** ce qui permet de faciliter le pivotement et l'assemblage des tronçons **2, 3.** Une telle disposition offre l'avantage de rendre plus rapide l'assemblage d'un premier tronçon **2** sur un deuxième tronçon **3.**

En outre, une telle disposition limite la quantité de bords saillants, ce qui protège l'utilisateur contre le risque de blessure. La manipulation et l'assemblage de tels tronçons **2, 3** est ainsi rendue davantage sécurisée pour l'utilisateur.

## Revendications

1. Tronçon de chemin (**2, 3**) de câbles en treillis de fils comprenant des fils de chaîne (**14-17**), des fils de trame (**13**) et une ouverture (**12**) longitudinale, les fils de trame (**13**) étant pliés dans un plan transversal et comportant quatre portions (**8-11**) successives séparées par trois plis (**19-21**), deux portions (**9, 10**) des fils de trame (**13**) s'étendant sur deux côtés du tronçon (**2, 3**), deux portions (**8, 11**) extrêmes des fils de trame (**13**) s'étendant de part et d'autre de l'ouverture (**12**), le tronçon (**2, 3**) comprenant une première partie (**4**) extrême et un deuxième partie (**5**) extrême, les parties extrêmes (**4, 5**) étant chacune pourvues d'un fil de trame (**13**) d'extrémité, **caractérisé en ce que** la première partie (**4**) extrême porte des moyens d'assemblage (**6, 7**) en saillie dans une direction sensiblement perpendiculaire au plan transversal du fil de trame (**13**) d'extrémité, les moyens (**6, 7**) d'assemblage étant configurés pour être encliquetés sur le fil de trame (**13**) d'extrémité de la deuxième partie (**5**) extrême d'un tronçon de chemin (**2, 3**) de câbles.

2. Tronçon de chemin (**2, 3**) de câbles selon la revendication 1, **caractérisé en ce que** les moyens d'assemblage (**6, 7**) comprennent une première pièce d'assemblage (**22**) en forme de boucle (**32**) de fil.

3. Tronçon de chemin (**2, 3**) de câbles selon la revendication 2, **caractérisé en ce que** la première pièce d'assemblage (**22**) est fixée sur la première portion extrême (**8**) d'au moins un fil de trame (**13**).

4. Tronçon de chemin (**2, 3**) de câbles selon la revendication 3, **caractérisé en ce que** l'ouverture (**12**) est bordée par un fil de chaîne (**14**) formant fil de rive (**18**), la première pièce d'assemblage (**22**) comprenant deux bras longitudinaux, l'un des bras étant au contact du fil de rive (**18**).

5. Tronçon de chemin (**2, 3**) de câbles selon l'une quelconque des revendications 1 à 4, **caractérisé en ce que** les moyens d'assemblage (**6**, **7**) comprennent une deuxième pièce d'assemblage (**23**) en forme de boucle de fil.

6. Tronçon de chemin (**2, 3**) de câbles selon l'une quelconque des revendications précédentes, **caractérisé en ce que** le tronçon de chemin (**2, 3**) de câbles présente une section triangulaire.

7. Tronçon de chemin (**2, 3**) de câbles selon la revendication 6, **caractérisé en ce que** l'ouverture (**12**) s'étend sur un premier côté du tronçon (**2, 3**) formé par les portions extrêmes (**8, 11**) des fils de trame (**13**), les moyens d'assemblage (**6, 7**) comprenant une première pièce d'assemblage (**22**) en forme de boucle (**32**) de fil fixée sur la première portion extrême (**8**) des fils de trame (**13**), chacun des deux autres côtés du tronçon (**2, 3**) comprenant, en saillie dans une direction sensiblement perpendiculaire au plan transversal du fil de trame (**13**) d'extrémité, une deuxième pièce d'assemblage (**23**) en forme de boucle de fil.

8. Tronçon de chemin (**2, 3**) de câbles selon l'une quelconque des revendications 1 à 6, **caractérisé en ce que** le tronçon de chemin (**2, 3**) de câbles présente une section en G définie par quatre portions successives (**8-11**) des fils de trame, l'ouverture (**12**) s'étendant sur un angle du tronçon (**2, 3**) formé par les portions extrêmes (**8, 11**) des fils de trame (**13**), les moyens d'assemblage (**6, 7**) comprenant une première pièce d'assemblage (**22**) en forme de boucle (**32**) de fil fixée sur la première portion extrême (**8**) des fils de trame (**13**), deux autres côtés du tronçon (**2, 3**) comprenant, en saillie dans une direction sensiblement perpendiculaire au plan transversal du fil de trame (**13**) d'extrémité, une deuxième pièce d'assemblage (**23**) en forme de boucle de fil.

9. Tronçon de chemin (**2, 3**) de câbles selon la revendication 8, **caractérisé en ce que,** partant d'un premier bord de l'ouverture (**12**) et allant vers le second bord de l'ouverture (**12**) en suivant les fils de trame (**13**), le tronçon comprend un premier côté sur lequel est fixé une première pièce d'assemblage (**22**) en forme de boucle (**32**) de fil, un deuxième et un troisième côté sur chacun desquels est fixé une deuxième pièce d'assemblage (**23**) en forme de boucle de fil, et un quatrième côté ne comportant pas de moyen d'assemblage.

10. Procédé de montage d'un ensemble (**1**) de deux tronçons de chemin de câbles en treillis de fils, les tronçons comprenant des fils de chaîne (**14-17**) s'étendant suivant une direction longitudinale, des fils de trame (**13**) et une ouverture (**12**) longitudinale, les fils de trame (**13**) étant pliés dans un plan transversal et comportant quatre portions (**8-11**) successives séparées par trois plis (**19-21**), le procédé étant **caractérisé en ce qu'**il comprend une étape de rotation d'un premier tronçon par rapport à l'autre, suivant la direction longitudinale, suivie d'une étape d'encliquetage.

11. Procédé de montage d'un ensemble (**1**) de deux tronçons tels que présentés dans l'une quelconque des revendications 1 à 9, le procédé de montage comprenant les étapes suivantes:
- rapprochement d'une première partie (**4**) extrême du premier tronçon de chemin (**2**) de câbles avec la deuxième partie (**5**) extrême du deuxième tronçon de chemin (**3**) de câbles,
- insertion des moyens (**6, 7**) d'assemblage au sein d'un espace défini par le fil (**13**) de trame de la deuxième partie (**5**) extrême du deuxième tronçon de chemin (**3**) de câbles, de sorte à positionner un premier moyen (**6**) d'assemblage en regard de la première aile (**7**) du deuxième tronçon de chemin (**3**) de câbles,
- pivotement du premier tronçon de chemin (**2**) de câbles et/ou du deuxième tronçon de chemin (**3**) de câbles, de sorte à permettre l'encliquetage du fil (**13**) de trame au sein du premier moyen (**6**) d'assemblage.
